# EUROPEAN PATENT SPECIFICATION

(11) **EP 4 309 938 B1**
(45) Date of publication and mention of the grant of the patent: **09.07.2025**
(21) Application number: 23171639.0
(22) Date of filing: 04.05.2023
(51) Int. Cl.: B60K 6/485, B60W 10/06, B60W 10/08, B60W 20/10, B60W 30/18

(54) **METHOD FOR CONTROLLING VEHICLE CREEP, CONTROLLER, AND COMPUTER PROGRAM PRODUCT**
VERFAHREN ZUR STEUERUNG DER KRIECHUNG EINES FAHRZEUGS, STEUERGERÄT UND COMPUTERPROGRAMMPRODUKT
PROCÉDÉ DE COMMANDE DE RAMPAGE DE VÉHICULE, DISPOSITIF DE COMMANDE ET PRODUIT DE PROGRAMME INFORMATIQUE

(30) Priority: 19.07.2022 CN 202210849139
(43) Date of publication of application: 24.01.2024
(73) Proprietor: Robert Bosch GmbH, 70442 Stuttgart (DE)
(72) Inventor: FANG, Wei, Wuxi, Jiangsu, 214028 (CN); XU, He, Wuxi, Jiangsu, 214028 (CN); ZHANG, Xingguo, Wuxi, Jiangsu, 214028 (CN)

(56) References cited:
- CN-A- 114 347 988
- US-A1- 2004 204 285
- US-A1- 2017 072 943

## Description

### Technical Field

The present application relates to the field of vehicle control and specifically to a method for controlling vehicle creep, a controller, and a computer program product.

### Background

A conventional vehicle with an internal combustion engine as a driving source may be configured with a creep function. During vehicle travel, a vehicle controller determines whether to enter a fuel creep mode based on vehicle status information such as the vehicle speed and the opening degree of the accelerator pedal and brake pedal. For example, when it is determined that the vehicle speed is below 8 km/h, and the acceleration pedal and brake pedal are not depressed, it is determined that the vehicle can enter a creep state. When at least one creep condition is not met, the vehicle exits the creep state based on a control signal. The engine of the vehicle during fuel creep is in an idle running state, and the vehicle travels at a low speed, which improves the ease of operation of the vehicle while traveling in a congested road section. However, during fuel creep, the vehicle's fuel efficiency decreases and emissions of exhaust air cause air pollution. To improve vehicle driving, existing hybrid vehicles are also able to simulate idle running in conventional fuel vehicles under specific conditions, i.e., simulate fuel creep in an electric creep mode. However, motors with existing P0 and P1 hybrid architectures focus only on engine start and stop, brake energy recovery, and auxiliary power output.

An electric creep mode control is known from document CN 114 347 988 A.

### Summary

An object of the present disclosure is to provide a method for controlling vehicle creep, a controller, and a computer program product. One or more embodiments efficiently utilize a motor to drive an engine to operate for a particular hybrid architecture such that the engine realizes an electric creep function in a condition where fuel injection ignition is stopped. One or more exemplary embodiments improve fuel efficiency of a vehicle by reasonably increasing the time of electric creep, while some embodiments consider switching conditions of electric creep and fuel creep to improve driving of the vehicle.

According to one aspect of the present disclosure, a method of controlling vehicle creep is disclosed, including: controlling the vehicle to enter an electric creep mode in which a motor operates as a driving source to drive an engine to operate to provide a creep force for the vehicle in response to release of a brake operation of a first braking process; controlling the vehicle to exit the electric creep mode according to an electric creep exit condition; and restricting the vehicle from entering the electric creep mode according to a second predetermined condition in response to release of a brake operation of a second braking process after the first braking process.

According to one aspect of the present disclosure, the process of controlling the vehicle to enter an electric creep mode according to a first predetermined condition further includes: triggering a first engine control process to shut down the engine when the first braking process causes a vehicle speed of the vehicle to be 0, and in response to release of the brake operation, causing the vehicle to enter the electric creep mode; or triggering a second engine control process to enter a fuel creep mode with the engine as a driving source when the first braking process causes the vehicle speed of the vehicle to drop to a creep speed range, and then controlling the vehicle to switch from the fuel creep mode to the electric creep mode.

According to one aspect of the present disclosure, the process of controlling the vehicle to exit the electric creep mode according to an electric creep exit condition includes: in response to a state of charge SOC of a battery being below an SOC threshold, controlling the vehicle to exit the electric creep mode and instead enter the fuel creep mode. The process of controlling the vehicle to exit the electric creep mode according to an electric creep exit condition further includes: in response to an acceleration signal, controlling the vehicle to exit the electric creep mode and instead enter a non-creep mode.

According to one aspect of the present disclosure, the process of restricting the vehicle from entering the electric creep mode according to a second predetermined condition includes: restricting the vehicle from entering the electric creep mode for a period of time starting from entering a non-creep mode after the first braking process to triggering the second braking process, when it is determined that the period of time is less than a predetermined period of time. The process of restricting the vehicle from entering the electric creep mode according to a second predetermined condition further comprises: restricting the vehicle from entering the electric creep mode for a period of time from entering the non-creep mode after the first braking process to triggering the second braking process, when it is determined that the vehicle maximum speed during this period of time is less than a vehicle speed threshold. In some examples, engine shutdown is forbidden according to the second predetermined condition in response to release of the brake operation of the second braking process after the first braking process.

According to one aspect of the present disclosure, a controller for controlling vehicle creep is disclosed, where the controller includes a processor and a memory, where the memory stores computer program instructions that, when executed by the processor, enable the processor to perform the above method.

According to one aspect of the present disclosure, a computer program product is disclosed, including computer program instructions, where when the computer program instructions are executed by one or more processors, the processor is capable of performing the above method.

### Brief Description of the Drawings

The principles, features and advantages of the present disclosure will be more fully understood by referring to the detailed description of the following detailed description in conjunction with the attached drawings.
FIG. 1 is a schematic view of a vehicle hybrid power system according to an embodiment of the present application.
FIG. 2 is a step schematic diagram of a method for controlling vehicle creep according to an embodiment of the present application.
FIG. 3 is a flowchart of a method for controlling vehicle creep according to another embodiment of the present application.
FIG. 4 is a flowchart of a method for controlling vehicle creep according to yet another embodiment of the present application.
FIG. 5 is a schematic diagram of a controller for controlling vehicle creep according to an embodiment of the present application.

### Description of Embodiments

In order to make the technical problems to be solved, technical solutions and beneficial technical effects of the present disclosure clearer, the present disclosure will be further described in detail below in conjunction with the accompanying drawings and various exemplary embodiments. It is to be understood that the specific embodiments described herein are for the purpose of interpreting the present disclosure only and are not intended to define the scope of protection of the present disclosure.

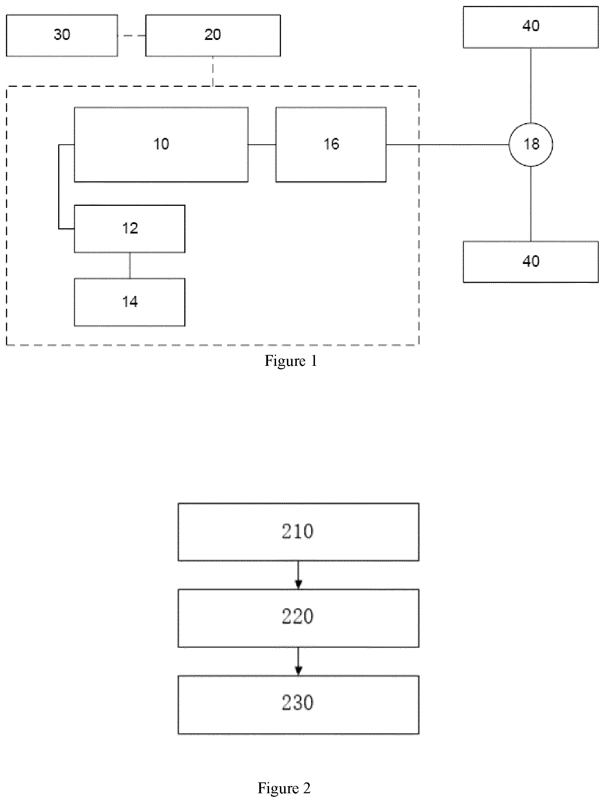

FIG. 1 is a schematic view of a vehicle hybrid power system according to an embodiment of the present application. For the sake of brevity, FIG. 1 shows only a part of components of a vehicle hybrid power system. As shown in FIG. 1, the vehicle power system includes an engine 10, which may be an internal combustion engine fueled by gasoline, diesel, or natural gas, etc. The engine drives a transmission 16 to couple power through the transmission 16 to a transmission shaft that transmits torque to a differential 18. The differential 18 distributes the torque to wheels 40 via a shaft. As an example, the engine 10 and a motor 12 are configured in an architecture of P0. The motor 12 is a motor configured to act as a motor and/or generator, such as a belt starter generator (BSG) motor. The motor 12 is operably coupled to a crankshaft of the engine 10 by, for example, a tensioning member (e.g., a belt). With the belt, transmission of the torque may be achieved between the engine 10 and the motor 12. The motor 12 is electrically connected to a battery 14. The motor 12 and the battery 14 may be part of a 48V electrical system. The motor 12 is connected to the battery 14 and other electrical systems of the vehicle by power electronic devices (not shown). Typically, a vehicle with a P0 motor can achieve engine start and stop, brake energy recovery, and auxiliary power output. The motor 12 may act as a starting engine 10 during engine start-up or be configured to provide an additional torque to the power system. The motor 12 may also receive a torque from the engine 10 to operate as a generator to charge the battery 14. In other embodiments, the engine 10 and the motor 12 may be configured in a different manner, and in one example, the engine 10 and the motor 12 are configured in an architecture of P1. The P1 motor is located at the rear end of the engine as an integrated starter generator (ISG) motor, which is connected to the crankshaft and also implements engine start and stop, brake energy recovery, and auxiliary power output. In the present disclosure, according to one or more embodiments, the motor 12 is used as a driving source according to a driving status of the vehicle, so that the vehicle enters an electric creep state, thereby reducing idling time of the engine 10, shortening a low-efficiency working interval of the engine, and improving fuel efficiency and a driving feeling.

As shown in FIG. 1, the vehicle power system further includes a controller 20, which may be a vehicle control unit (VCU). As a main controller of the vehicle, the vehicle control unit can receive information of various components of the vehicle, and delivers an instruction to a next level of controller and device based on judgment and processing results of the received information to realize specific functions of the vehicle. A person skilled in the art may also understand that the controller 20 may alternatively be other controllers controlled by the VCU. The controller 20 obtains various signals from one or more sensors 30 and other in-vehicle electronic control units (ECU) to control various vehicle components such as the engine 10 and the motor 12. The sensor 30 may include a vehicle speed sensor that detects a vehicle speed, a brake pedal sensor that detects a brake pedal opening degree, an accelerator opening sensor that detects an accelerator pedal opening degree, a charge-discharge current that detects a battery, a battery sensor of an SOC, and/or the like. Sensor signals received by the controller 20 through an I/O interface (not shown) may indicate vehicle status information such as an engine status (e.g., an engine speed), a vehicle speed (e.g., a current vehicle speed and historical vehicle speed records), an accelerator pedal position, a brake pedal position, a transmission gear, a battery temperature, a voltage, a current, or a state of charge (SOC). A person skilled in the art may understand that the functions completed by one or more embodiments of the present application may be implemented by various program modules implemented as computer code in the controller 20, and control logic executed by the controller 20 is configured to be able to switch between fuel creep with the engine as the driving source and electric creep with the motor as the driving source. The control logic executed by the controller 20, for example, may also control the timing, rate, and period of fuel injection of the injector of the engine 10, and related operations of the motor 12 and the battery 14. The controller 20 may be configured to transmit a signal to the motor 12 to operate the motor 12 as a motor or a generator. The controller 20 is configured to be able to determine a driver demand torque from the accelerator pedal opening degree/accelerator pedal position signal and to increase a required braking torque to decelerate the vehicle according to the braking pedal opening degree/brake pedal position signal. The controller 20 is configured to be capable of being programmed to control which of the engine 10 and the motor 12 is the driving source of the vehicle, as well as torque distribution between the two.

In another embodiment, in response to meeting one or more predefined conditions, the controller 20 may trigger the engine 10 to stop, at which point the controller may send an instruction to the motor 12 such that the motor 12 applies a torque to the engine to assist the engine 10 in decelerating and/or stopping. The vehicle may be provided with an engine start-stop function enabled by the controller 20. Once one or more predefined engine stop conditions are detected, the controller 20 sends a stop signal to the engine 10, commanding the engine 10 to stop to save fuel and reduce emissions. In one example, controlling the motor 12 to apply a negative torque (load) to the engine 10 reduces the engine stop time, thereby further improving fuel efficiency and improving user experience. In a particular case as described below, in response to meeting one or more predefined conditions, the controller 20 may trigger an instruction to inhibit the engine 10 from shutting down, during which the engine will be inhibited from running.

FIG. 2 is a step schematic diagram of a method for controlling vehicle creep according to an embodiment of the present application. As shown in the figure, the method for controlling vehicle creep includes steps 210-230. In step 210, control the vehicle to enter an electric creep mode. In step 220, control the vehicle to exit the electric creep mode. In step 230, restrict the vehicle from entering the electric creep mode. This embodiment improves fuel efficiency and operability of the vehicle by establishing the timing of the vehicle entering electric creep for a particular situation during vehicle traveling. For a motor of a particular interactive architecture, it is advantageous to consider the timing of electric creep by using the motor.

In step 210, control the vehicle to enter an electric creep mode, according to a first predetermined condition, in which a motor operates as a driving source to drive an engine to operate to provide a creep force for the vehicle in response to release of a brake operation of a first braking process; In the creep mode, the vehicle may be propelled at a low speed by the engine 14 in a fuel creep mode or by the motor 12 in the electric creep mode. When the vehicle enters the electric creep mode, the controller 20 may cause the engine 14 to stop fuel injection ignition while driving the engine to rotate with the motor 12 to propel the vehicle. In one example, creep refers to low speed driving of the vehicle 10 when the brake operation is disengaged (no brake signal generated) and the acceleration pedal is not depressed (no acceleration signal generated). Creep is triggered when the vehicle speed is, for example, below 8 kilometers per hour. Herein, for the first predetermined condition, a person skilled in the art may understand that the status information of the vehicle meets the requirement of being able to enter conventional fuel creep, and also meets the condition of being able to conduct electric creep with the battery 14. In this step, when the speed of the vehicle is below the upper limit of a creep speed and the condition of the vehicle meets other creep conditions, it is considered to control the vehicle to enter fuel creep or electric creep. In particular, when at least the state of charge (SOC) of the battery 14 meets the electrical power requirement for electric creep, electric creep is used instead of fuel creep. In a particular scenario, such as in a congested section, it is advantageous to automatically determine the vehicle status and enter electric creep when the driver presses the brake pedal to control the vehicle to decelerate.

In step 220, control the vehicle to exit the electric creep mode according to an electric creep exit condition. The vehicle is controlled to exit electric creep when at least one condition for conducting electric creep is not met. It will be appreciated by a person skilled in the art that the condition of exiting electric creep includes at least that the state of charge (SOC) of the battery 14 does not meet a threshold for conducting electric creep (e.g., when the SOC becomes less than 25%) and an opening degree threshold of the speed pedal (e.g., when the acceleration pedal opening degree becomes greater than 10%). It will also be appreciated by a person skilled in the art that the conditions for exiting electric creep may also include a variety of other factors such as the slope of the lane and the respective working states of the motor 12, the battery 14, and a DC/DC converter. In one example, after exiting electric creep, the vehicle may enter fuel creep when fuel creep requirements are still met according to the status of the vehicle. In this case, the acceleration pedal and brake pedal are not depressed or their opening degrees are below a threshold, the controller 20 controls the engine to perform fuel injection ignition to drive the vehicle to run at an idle speed. When the fuel creep requirements are not met, the vehicle enters a non-creep state, for example, a regular driving state.

In step 230, restrict the vehicle from entering the electric creep mode according to a second predetermined condition in response to release of a brake operation of a second braking process after the first braking process. Herein, the second predetermined condition is restricting the vehicle from entering the electric creep mode on the basis of considering the first predetermined condition in a case in which the vehicle enters and exits the electric creep mode due to a previous braking process. That is, when the vehicle status meets the first predetermined condition and can enter electric creep, the vehicle actively avoids entering electric creep. In particular scenarios, such as traffic jams, the vehicle switches among slow driving, accelerated driving, and parked states. If the vehicle stops frequently in a jammed condition and the engine is controlled to stop, emissions increase and a delay in dynamic response is caused. Considering the capacity of the battery 14 of the vehicle in the P0 and P1 architectures and the frequent start and stop of the engine in the vehicle, in a process in which front-to-rear continuous vehicles decelerate to enter a creep speed range (for example, less than 8 km/h), it is considered to restrict the vehicle from entering the electric creep mode, and restrict the engine from automatically starting and stopping. Therefore, the battery power and the power recovery are reasonably distributed, and driving performance of the vehicle is improved.

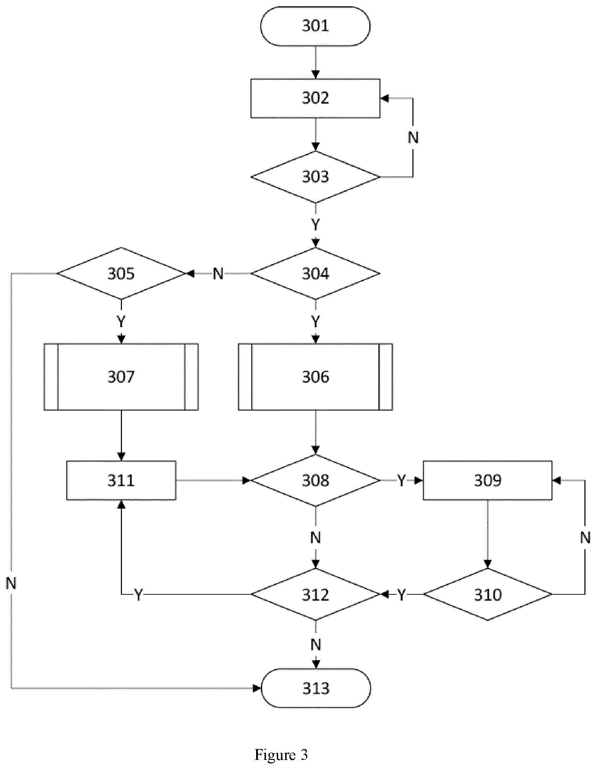

FIG. 3 is a flowchart of a method for controlling vehicle creep according to another embodiment of the present application. The flowchart shows a process of determining state switching of the vehicle in the fuel creep state, the electric creep state, and non-creep states including other driving states. The method begins at 301 and ends at 313. In the beginning phase 301, the vehicle is in a non-creep state; in the end phase 313, control of vehicle creep is ended. For example, when the vehicle needs to decelerate to stop when encountering a traffic signal, or needs to stop for a long time or intermittently in a congested road section, the vehicle enters a vehicle braking deceleration process 302 according to a brake signal generated when the brake pedal is depressed. In step 303, determine whether the brake pedal is released, that is, whether a brake operation is released. When the brake operation is released, at least the vehicle speed is determined in steps 304 and 305 to consider whether to enable the vehicle to enter the electric creep mode.

As described previously in accordance with FIG. 2, in step 210, control the vehicle to enter an electric creep mode, according to a first predetermined condition, in which a motor operates as a driving source to drive an engine to operate to provide a creep force for the vehicle in response to release of a brake operation of a first braking process. Herein, referring to FIG. 3, for release of the brake operation in the first braking process, the controlling the vehicle to enter the electric creep mode according to the first predetermined condition includes: When it is determined in step 304 that the vehicle speed has been reduced to 0, entering a first engine control process 306; or when it is determined in step 305 that the vehicle speed has not been reduced to 0 and the vehicle speed is within the creep vehicle speed range, entering a second engine control process 307. According to an embodiment, the first and second engine control processes enable the vehicle to enter, at an appropriate time, the electric creep mode driven by the motor 12.

When it is determined in step 304 that the vehicle speed of the vehicle is 0 due to the braking process, the first engine control process 306 is triggered to stop the engine. A person skilled in the art may understand that an engine shutdown process includes: stopping fuel injection ignition of the engine, and reducing the engine speed to 0. If another shutdown condition of the engine also holds, for example, the controller 20 may output an engine stop request to the engine ECU, so that the engine automatically stops. Herein, a person skilled in the art may understand that, in addition to the trigger condition that the vehicle speed is 0, another stop condition of the engine may include, for example, a condition that no acceleration operation is performed, and the slope of the road on which the vehicle is located is less than a threshold. When the controller 20 causes the engine 10 to stop, the fuel supply to the engine 10 and the fuel injection ignition process stop. Thereafter, in step 308, it is determined whether to enter electric creep. In this process, when the driver releases the brake pedal, if each condition of electric creep is met, for example, the gear of the vehicle is in the forward gear, the battery SOC is above a threshold (for example, the current SOC is 70%), and another electronic system of the vehicle is in a normal running state, the controller 20 sends a control signal to the motor 12, switches the motor 12 from another mode (for example, brake energy recovery) to the creep drive mode, and drives the engine by using the motor 12 to run, so as to provide a driving force for electric creep. In step 309, the vehicle is in the electric creep mode, at which point the engine is in the running state, but no fuel injection ignition is performed. As will be described later, in some cases, considering additional conditions, in step 308, the controller 20 will restrict the vehicle from entering the electric creep mode.

Trigger a second engine control process 307 to enter a fuel creep mode 311 with the engine as a driving source when it is determined in step 305 that the braking process causes the vehicle speed of the vehicle to drop to a creep speed range, and then control the vehicle to switch from the fuel creep mode to the electric creep mode 309. In this case, the vehicle speed is not 0, so the first engine control process is not triggered. In the second engine control process 307, the vehicle enters the conventional fuel creep process 311 by using known engine control logic.

In one example, conventional fuel creep is activated first and the vehicle enters the fuel creep mode in step 311 when the engine is idling (steady state condition). Next, in step 308, it is determined whether electric creep can be activated. When electric creep can be activated, the controller 20 receives a torque that is required by creep and that is sent by a transmission control unit (TCU), and sends the torque to the control motor 12 after torque coordination, so that the engine in the idle state smoothly transitions from fuel creep to electric creep 309. During the switching process from fuel creep to electric creep, the engine speed remains stable, improving the driver's driving experience. When it is determined in step 308 that electric creep cannot be activated, the method proceeds to step 312. In step 312, it is determined whether the fuel creep condition is still met, and if yes, fuel creep in step 311 is continued; otherwise, vehicle creep control is exited.

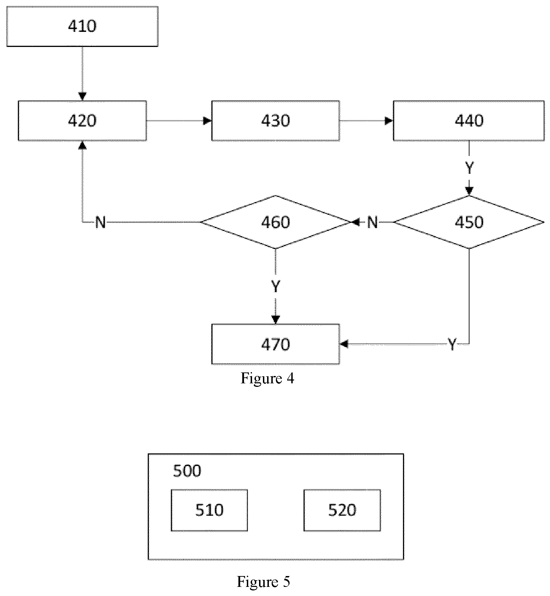

In another embodiment, when it is determined in step 308 whether electric creep can be activated, it is further additionally determined whether a current occasion is suitable for entering the electric creep mode again. As described above, in a case of entering and exiting the electric creep mode due to the previous braking process, when the vehicle status meets the first predetermined condition and electric creep can be entered, entering electric creep is also actively avoided. The control logic that restricts entering the electric creep is described below with reference to FIG. 4.

The above describes the control of entering electric creep. In step 310, it is determined whether to exit electric creep. The vehicle is controlled to exit the electric creep mode according to an electric creep exit condition. The process of controlling the vehicle to exit the electric creep mode according to an electric creep exit condition comprises: in response to a state of charge (SOC) of a battery being below an SOC threshold (e.g., 25%), controlling the vehicle to exit the electric creep mode and instead enter the fuel creep mode; or in response to an acceleration signal (e.g., the accelerator pedal opening degree is greater than 10%), controlling the vehicle to exit the electric creep mode and instead enter a non-creep mode. As described above, it may be determined whether the fuel creep condition is still met in step 312, and if yes, fuel creep in step 311 is continued.

FIG. 4 is a flowchart of a method for controlling vehicle creep according to another embodiment of the present application. As described above, when it is determined in step 308 whether electric creep can be activated, it is further additionally determined whether a current occasion is suitable for entering the electric creep mode again. In step 450 and step 460 of FIG. 4, it is determined whether it is suitable for entering the electric creep mode again. FIG. 4 shows a procedure of a method for additionally determining whether a current occasion is suitable for entering the electric creep mode again. As shown in FIG. 4, when the first predetermined condition is met, the vehicle enters the electric creep process 420 from the first braking process 410. After exiting the electric creep process 420, the vehicle enters the non-creep mode process 430. In a particular case, the driver will perform the brake operation again, and thereby the vehicle enters the second braking process 440. In this case, the controller performs at least determining in step 450 and step 460 when conditions of conventional fuel creep and electric creep are met, so as to actively avoid entering the electric creep mode, even if the vehicle can travel in the electric creep mode in the current case. In step 450, it is determined whether a period of time from entering the non-creep mode after the first braking process to triggering the second braking process is less than a predetermined period of time, and when it is determined that the period of time is less than the predetermined period of time, the vehicle is restricted from entering the electric creep mode, and the vehicle is controlled to enter the fuel creep mode 470. In one example, the predetermined period of time is 30 seconds. If, in step 450, it is determined that the period of time is not less than the predetermined period of time, determining in step 460 is proceeded. In step 460, it is determined whether the vehicle maximum speed during the period of time is less than a threshold, and when the maximum speed is less than the threshold, the vehicle is restricted from entering the electric creep mode and the vehicle is controlled to enter the fuel creep mode 470. In one example, the threshold is 15 km/h. In other examples, duration of the predetermined period of time is from 15 seconds to 30 seconds, and the range of the vehicle speed threshold is from 15 km/h to 30 km/h. In another example, the engine is restricted from entering a shutdown process (inhibiting engine shutdown) according to a second predetermined condition in response to release of the brake operation of the second braking process after the first braking process. As such, frequent starting and stopping of the engine caused when the vehicle speed is reduced to 0 can be avoided.

FIG. 5 is a schematic diagram of a controller for controlling vehicle creep according to an embodiment of the present application. A vehicle creep control apparatus 500 is configured to implement, for example, a control operation of the controller 20 in FIG 1, and is applied to the vehicle creep control method shown in FIGS. 2-4. The vehicle creep controller 500 may include a processor 510 and a memory 520. The processor 510 and the memory 520 communicate via a bus, or may communicate via other means such as wireless transmission. The memory 520 is configured to store instructions and the processor 510 is configured to execute the instructions stored by the memory 520. The memory 520 may include a read only memory (ROM) and a random access memory (RAM) and is capable of storing executable instructions used by the controller 20 to control an engine, a motor, or another component of a vehicle. The processor 510 may invoke program code stored in the memory 520 to perform a plurality of steps of the vehicle control method described above. The vehicle creep control apparatus 500 further includes an internal memory and a communication interface not shown in FIG. 5. The controller 20 communicates with various vehicle electronic components via an input/output (I/O) interface. Computer program code stored in the memory 520 is loaded into the internal memory, and is then executed by the processor 510.

The foregoing one or more embodiments or various examples may be implemented in whole or in part by using software, hardware, firmware, or a combination thereof. When implemented using software, the embodiments may be implemented in whole or in part in the form of a computer program product. The computer program product includes one or more computer instructions. When the computer program instructions are loaded and executed on the computer, all or some of the procedures or functions described in the embodiments of this application are generated. The computer may be a general purpose computer, a dedicated computer, a computer network, or another programmable apparatus. Computer instructions may be stored in a computer-readable storage medium or transmitted from a network server to another computer by a wired or wireless means.

In the embodiments of this application, the described functional units and apparatuses are merely examples. Function unit division is logical function division, and there may be another division manner during implementation. A plurality of units and apparatuses may be physically separate or may be distributed over network units, which may be combined or may be integrated into another system. The above is only the specific embodiments of the present application. Variations or substitutions may occur to a person skilled in the art in light of the specific embodiments provided herein, nevertheless the scope of protection of the present application is defined by the appended claims.

## Claims

1. A method for controlling vehicle creep, comprising:
controlling (210) the vehicle to enter an electric creep mode in which a motor operates as a driving source to drive an engine to operate to provide a creep force for the vehicle in response to release of a brake operation of a first braking process;
controlling (220) the vehicle to exit the electric creep mode according to an electric creep exit condition; and the method being **characterized in that** it further comprises:
restricting (230) the vehicle from entering the electric creep mode according to a second predetermined condition in response to release of a brake operation of a second braking process after the first braking process.

2. The method according to claim 1, wherein the vehicle is controlled to enter the electric creep mode according to a first predetermined condition, and the method further comprises:
triggering a first engine control process to shut down the engine when the first braking process causes a vehicle speed of the vehicle to be 0, and in response to release of the brake operation, causing the vehicle to enter the electric creep mode; or
triggering a second engine control process to enter a fuel creep mode with the engine as a driving source when the first braking process causes the vehicle speed of the vehicle to drop to a creep speed range, and then controlling the vehicle to switch from the fuel creep mode to the electric creep mode.

3. The method according to claim 1, wherein
the process of controlling the vehicle to exit the electric creep mode according to an electric creep exit condition comprises:
in response to a state of charge SOC of a battery being below an SOC threshold, controlling the vehicle to exit the electric creep mode and instead enter a fuel creep mode with the engine as a driving source.

4. The method according to claim 1, wherein
the process of controlling the vehicle to exit the electric creep mode according to an electric creep exit condition comprises:
in response to an acceleration signal, controlling the vehicle to exit the electric creep mode and instead enter a non-creep mode.

5. The method according to claim 1, wherein
the process of restricting the vehicle from entering the electric creep mode according to a second predetermined condition comprises:
restricting the vehicle from entering the electric creep mode for a period of time starting from entering a non-creep mode after the first braking process to triggering the second braking process, when it is determined that the period of time is less than a predetermined period of time.

6. The method according to claim 5, wherein
the process of restricting the vehicle from entering the electric creep mode according to a second predetermined condition further comprises:
restricting the vehicle from entering the electric creep mode for a period of time from entering the non-creep mode after the first braking process to triggering the second braking process,
when it is determined that the vehicle maximum speed during this period of time is less than a vehicle speed threshold.

7. The method according to claim 6, wherein
duration of the predetermined period of time is from 15 seconds to 30 seconds, and the range of the vehicle speed threshold is from 15 km/h to 30 km/h.

8. The method according to claim 7, wherein
engine shutdown is forbidden according to the second predetermined condition in response to release of the brake operation of the second braking process after the first braking process.

9. A controller for controlling vehicle creep, wherein the controller comprises a processor and a memory, wherein the memory stores computer program instructions that, when executed by the processor, enable the processor to perform the method according to any one of claims 1-8.

10. A computer program product comprising computer program instructions, wherein when the computer program instructions are executed by one or more processors, the processor is capable of performing the method according to any one of claims 1-8.

## Patentansprüche

1. Verfahren zum Steuern einer Fahrzeugkriechung, umfassend:
Steuern (210) des Fahrzeugs, um in einen elektrischen Kriechmodus einzutreten, in dem ein Motor als Antriebsquelle betrieben wird, um einen Motor zum Betrieb anzutreiben, um eine Kriechkraft für das Fahrzeug bereitzustellen, als Reaktion auf das Lösen eines Bremsvorgangs eines ersten Bremsprozesses;
Steuern (220) des Fahrzeugs, um den elektrischen Kriechmodus gemäß einer elektrischen
Kriechaustrittsbedingung zu verlassen; und das Verfahren ist **dadurch gekennzeichnet, dass** es ferner umfasst:
Einschränken (230) des Fahrzeugs am Eintreten in den elektrischen Kriechmodus gemäß einer zweiten vorbestimmten Bedingung als Reaktion auf das Lösen eines Bremsvorgangs eines zweiten Bremsprozesses nach dem ersten Bremsprozess.

2. Verfahren nach Anspruch 1, wobei
das Fahrzeug gesteuert wird, um den elektrischen Kriechmodus gemäß einer ersten vorbestimmten Bedingung einzuleiten, und das Verfahren ferner Folgendes umfasst:
Auslösen eines ersten Motorsteuerungsprozesses zum Abschalten des Motors, wenn der erste Bremsprozess eine Fahrzeuggeschwindigkeit des Fahrzeugs auf 0 verursacht, und als Reaktion auf das Lösen des Bremsvorgangs das Fahrzeug zum Eintritt in den elektrischen Kriechmodus zu veranlassen; oder
Auslösen eines zweiten Motorsteuerungsprozesses zum Eintritt in einen Kraftstoffkriechmodus mit dem Motor als Antriebsquelle, wenn der erste Bremsprozess die Fahrzeuggeschwindigkeit des Fahrzeugs auf einen Kriechgeschwindigkeitsbereich abfallen lässt, und anschließendes Steuern des Fahrzeugs zum Wechsel vom Kraftstoffkriechmodus in den elektrischen Kriechmodus.

3. Verfahren nach Anspruch 1, wobei
der Prozess des Steuerns des Fahrzeugs zum Verlassen des elektrischen Kriechmodus gemäß einer elektrischen Kriechaustrittsbedingung Folgendes umfasst:
als Reaktion auf einen Ladezustand, SOC, einer Batterie, der unter einem SOC-Schwellenwert liegt, das Fahrzeug zum Verlassen des elektrischen Kriechmodus zu steuern und stattdessen in einen Kraftstoffkriechmodus mit dem Motor als Antriebsquelle eintreten zu lassen.

4. Verfahren nach Anspruch 1, wobei
der Prozess des Steuerns des Fahrzeugs zum Verlassen des elektrischen Kriechmodus gemäß einer elektrischen Kriechaustrittsbedingung Folgendes umfasst:
als Reaktion auf ein Beschleunigungssignal das Fahrzeug zum Verlassen des elektrischen Kriechmodus zu steuern und stattdessen in einen Nicht-Kriechmodus eintreten zu lassen.

5. Verfahren nach Anspruch 1, wobei
der Prozess des Einschränkens des Fahrzeugs am Eintritt in den elektrischen Kriechmodus gemäß einer zweiten vorbestimmten Bedingung Folgendes umfasst:
Einschränken des Fahrzeugs am Eintritt in den elektrischen Kriechmodus für einen Zeitraum beginnend mit dem Eintritt in einen Nicht-Kriechmodus nach dem ersten Bremsprozess bis zum Auslösen des zweiten Bremsprozesses, wenn bestimmt wird, dass der Zeitraum kürzer als ein vorbestimmter Zeitraum ist.

6. Verfahren nach Anspruch 5, wobei
der Prozess des Einschränkens des Fahrzeugs am Eintritt in den elektrischen Kriechmodus gemäß einer zweiten vorbestimmten Bedingung ferner Folgendes umfasst:
Einschränken des Fahrzeugs am Eintritt in den elektrischen Kriechmodus für einen Zeitraum vom Eintritt in den Nicht-Kriechmodus nach dem ersten Bremsprozess bis zum Auslösen des zweiten Bremsprozesses, wenn bestimmt wird, dass die maximale Fahrzeuggeschwindigkeit während dieses Zeitraums unter einem Fahrzeuggeschwindigkeitsschwellenwert liegt.

7. Verfahren nach Anspruch 6, wobei
die Dauer des vorbestimmten Zeitraums von 15 Sekunden bis 30 Sekunden beträgt und der Bereich des Fahrzeuggeschwindigkeitsschwellenwerts von 15 km/h bis 30 km/h liegt.

8. Verfahren nach Anspruch 7, wobei
ein Motorabschalten gemäß der zweiten vorbestimmten Bedingung als Reaktion auf das Lösen des Bremsvorgangs des zweiten Bremsprozesses nach dem ersten Bremsprozess verboten ist.

9. Steuergerät zum Steuern einer Fahrzeugkriechung, wobei das Steuergerät einen Prozessor und einen Speicher umfasst, wobei der Speicher Computerprogrammanweisungen speichert, die, wenn sie durch den Prozessor ausgeführt werden, den Prozessor befähigen, das Verfahren nach einem der Ansprüche 1 bis 8 auszuführen.

10. Computerprogrammprodukt, das Computerprogrammanweisungen umfasst, wobei, wenn die Computerprogrammanweisungen durch einen oder mehrere Prozessoren ausgeführt werden, der Prozessor befähigt ist, das Verfahren nach einem der Ansprüche 1 bis 8 auszuführen.

## Revendications

1. Procédé de commande de la marche rampante d'un véhicule, comprenant :
la commande (210) au véhicule d'adopter un mode de marche rampante électrique dans lequel un moteur électrique fait fonction de source d'entraînement pour entraîner un moteur thermique pour qu'il fournisse une force de marche rampante pour le véhicule en réponse au relâchement d'un actionnement de frein d'un premier processus de freinage ;
la commande (220) au véhicule de sortir du mode de marche rampante électrique selon une condition de sortie de marche rampante électrique ; et le procédé étant **caractérisé en ce qu'**il comprend en outre :
l'empêchement (230) fait au véhicule d'adopter le mode de marche rampante électrique selon une deuxième condition prédéterminée en réponse au relâchement d'un actionnement de frein d'un deuxième processus de freinage qui suit le premier processus de freinage.

2. Procédé selon la revendication 1,
le véhicule étant commandé pour adopter le mode de marche rampante électrique selon une première condition prédéterminée, et le procédé comprenant en outre :
le déclenchement d'un premier processus de commande de moteur thermique pour couper le moteur thermique lorsque le premier processus de freinage amène une vitesse de véhicule du véhicule à 0 et, en réponse au relâchement de l'actionnement de frein, la commande au véhicule d'adopter le mode de marche rampante électrique ; ou
le déclenchement d'un deuxième processus de commande de moteur thermique pour adopter un mode de marche rampante au carburant dans lequel le moteur thermique fait fonction de source d'entraînement lorsque le premier processus de freinage fait chuter la vitesse de véhicule du véhicule dans une plage de vitesse de marche rampante, puis la commande au véhicule de passer du mode de marche rampante au carburant au mode de marche rampante électrique.

3. Procédé selon la revendication 1,
le processus de commande au véhicule de sortir du mode de marche rampante électrique selon une condition de sortie de marche rampante électrique comprenant :
lorsqu'un état de charge, noté SOC, d'une batterie est au-dessous d'un seuil de SOC, la commande au véhicule de sortir du mode de marche rampante électrique et d'adopter à la place un mode de marche rampante au carburant dans lequel le moteur thermique fait fonction de source d'entraînement.

4. Procédé selon la revendication 1,
le processus de commande au véhicule de sortir du mode de marche rampante électrique selon une condition de sortie de marche rampante électrique comprenant :
en réponse à un signal d'accélération, la commande au véhicule de sortir du mode de marche rampante électrique et d'adopter à la place un mode de marche non rampante.

5. Procédé selon la revendication 1,
le processus d'empêchement fait au véhicule d'adopter le mode de marche rampante électrique selon une deuxième condition prédéterminée comprenant :
l'empêchement fait au véhicule d'adopter le mode de marche rampante électrique pendant un intervalle de temps à compter de l'adoption d'un mode de marche non rampante à la suite du premier processus de freinage jusqu'au déclenchement du deuxième processus de freinage, en cas de détermination que l'intervalle de temps est inférieur à un intervalle de temps prédéterminé.

6. Procédé selon la revendication 5,
le processus d'empêchement fait au véhicule d'adopter le mode de marche rampante électrique selon une deuxième condition prédéterminée comprenant en outre :
l'empêchement fait au véhicule d'adopter le mode de marche rampante électrique pendant un intervalle de temps à compter de l'adoption du mode de marche non rampante à la suite du premier processus de freinage jusqu'au déclenchement du deuxième processus de freinage, en cas de détermination que la vitesse maximale du véhicule durant cet intervalle de temps est inférieure à un seuil de vitesse du véhicule.

7. Procédé selon la revendication 6,
la durée de l'intervalle de temps prédéterminé étant comprise entre 15 secondes et 30 secondes, et la plage du seuil de vitesse du véhicule s'étend de 15 km/h à 30 km/h.

8. Procédé selon la revendication 7,
la coupure du moteur thermique étant bloquée selon la deuxième condition prédéterminée en réponse au relâchement de l'actionnement de frein du deuxième processus de freinage à la suite du premier processus de freinage.

9. Contrôleur pour commander la marche rampante d'un véhicule, le contrôleur comprenant un processeur et une mémoire, la mémoire stockant des instructions de programme d'ordinateur qui, lorsqu'elles sont exécutées par le processeur, permettent au processeur de réaliser le procédé selon l'une quelconque des revendications 1 à 8.

10. Produit-programme d'ordinateur comprenant des instructions de programme d'ordinateur, l'exécution des instructions de programme d'ordinateur par un ou plusieurs processeurs permettant au processeur de réaliser le procédé selon l'une quelconque des revendications 1 à 8.
